# EUROPÄISCHE PATENTSCHRIFT

(11) **EP 1 796 237 B1**
(45) Veröffentlichungstag und Bekanntmachung des Hinweises auf die Patenterteilung: **01.08.2007**
(21) Anmeldenummer: 05292693.8
(22) Anmeldetag: 13.12.2005
(51) Int. Cl.: H02G 15/34, H01R 4/68

(54) **Elektrische Durchführung zur Verbindung einer supraleitenden Einrichtung mit einer bei Raumtemperatur befindlichen Einrichtung**
Electrical bushing for connecting a superconducting device with a device at ambient temperature
Traversée électrique pour connexion d'un dispositif supraconducteur à un dispositif se trouvant à température ambiante

(43) Veröffentlichungstag der Anmeldung: 13.06.2007
(73) Patentinhaber: Nexans, Societe Anonyme, 75008 Paris (FR)
(72) Erfinder: Allais, Arnaud, 30625 Hannover (DE); Balog, Georg, 3408 Tranby (NO); Lallouet, Nicolas, 62200 Saint Martin Boulogne (FR)
(74) Vertreter: Döring, Roger

(56) Entgegenhaltungen:
- EP-A- 1 283 576
- PATENT ABSTRACTS OF JAPAN Bd. 2003, Nr. 12, 5. Dezember 2003 (2003-12-05) & JP 2005 033964 A (FURUKAWA ELECTRIC CO LTD:THE; CHUBU ELECTRIC POWER CO INC), 3. Februar 2005 (2005-02-03)

## Beschreibung

Die Erfindung betrifft eine elektrische Durchführung nach dem Oberbegriff des Anspruchs 1.

Elektrische Stromzuführungen für eine supraleitende Einrichtung wie beispielsweise ein supraleitendes Kabel oder einen supraleitenden Magnet sollen einen Anschluß der supraleitenden Einrichtung, welche sich bei einer Temperatur im Bereich um 70 Kelvin befindet, an eine Einrichtung, welche sich bei Umgebungstemperatur befindet, ermöglichen. Die Einrichtung, die sich bei Umgebungstemperatur befindet, ist in der Regel ein Stromnetz.

Aufgrund der Tatsache, daß sich die supraleitende Einrichtung, nachfolgend als Supraleiterkabel bezeichnet, bei einer um etwa 200 Kelvin niedrigeren Temperatur befindet als die bei Umgebungstemperatur befindliche Einrichtung, nachfolgend als Stromnetz bezeichnet, ist es notwendig, eine Stromzuführung zwischen dem Supraleiterkabel und dem Netz vorzusehen, welche eine Verbindung zwischen den Punkten unterschiedlichen Temperaturniveaus herstellt und die dabei auftretenden Wärmeverluste im Betrieb minimiert. Hierbei müssen die elektrischen Beanspruchungen durch die hohen Spannungen im Supraleiterkabel berücksichtigt werden.

Die elektrische Stromzuführung besteht aus einem zentralen Leiter, welcher mit einer Schicht aus Isoliermaterial versehen ist. Der in der Regel aus Kupfer bestehende Leiter dient dazu, den elektrischen Strom des Supraleiterkabels bis zu einem Endenabschluß zu führen, welcher sich auf Umgebungstemperatur befindet und mit dem Stromnetz verbunden ist. Der Leiter soll über eine angemessene Länge einen Temperaturübergang zwischen der Betriebstemperatur des Supraleiterkabels und der Umgebungstemperatur bewirken und dabei sicherstellen, daß die Verluste durch Wärmeleitung über die Länge des Leiters gering bleiben und ein Verdampfen der kryogenen Flüssigkeit, welche das Supraleitkabel kühlt, vermeidet. Der Querschnitt des Leiters sollte deshalb nicht zu groß gewählt werden. Indes kann ein hoher elektrischer Strom aufgrund einer Erwärmung des Leiters thermische Verluste aufgrund des Jouleeffektes verursachen und aus diesem Grund ist man bestrebt, den Querschnitt des Leiters zu vergrößern. Daraus resultieren zwei sich widersprechende Forderungen.

Ein weiteres zu lösendes technisches Problem besteht darin, die Verteilung des elektrischen Feldes zu beherrschen, welches durch die hohe Spannung des Leiters erzeugt wird, um Spannungsdurchschläge zu verhindern.

Aus der EP 1 283 576 ist ein Endabschluß eines Supraleiterkabels von einer sehr tiefen Temperatur zu einer wesentlich höheren Temperatur (Raumtemperatur) mittels einer Durchführung bekannt, bei welchem zwischen dem Supraleitkabel und der auf Umgebungstemperatur befindlichen Einrichtung (dem Stromnetz) ein vakuum- und wärmeisolierendes Bauteil vorgesehen ist, welches die Durchführung umgibt. Das Bauteil ist zwischen einem Flansch, welcher den kryogenen Teil abdichtet und einem Flansch, der den auf Raumtemperatur befindlichen Teil abdichtet, vorgesehen.

Die Durchführung besteht aus einem rohrförmigen Bauteil aus Edelstahl, welches mit faserverstärkten isolierenden Folien und elektrisch leitenden Folien umwickelt ist, welche als sogenannte kapazitive Feldsteuerelemente dienen. Die Durchführung kann eine konische oder zylindrische Form aufweisen, wobei sich der kleinere Durchmesser an dem dem Supraleitkabel benachbarten Ende befindet.

Aus der J.P 2005 033 964 A ist eine elektrische Durchführung gemäß dem Oberbegriff des Anspruchs 1 bekannt.

Der vorliegenden Erfindung liegt die Aufgabe zugrunde, eine Durchführung für den eingangs erwähnten Zweck bereitzustellen, welche die durch Wärmeleitung entstehenden Wärmeverluste und die Joule'schen Verluste reduziert.

Diese Aufgabe wird durch die im Anspruch 1 erfaßten Merkmale des Kennzeichens gelöst.

Weitere vorteilhafte Ausgestaltungen der Erfindung sind in den Unteransprüchen erfaßt.

Die wesentlichen Vorteile der Erfindung bestehen darin, daß eine dielektrische Schicht durch Formgießen auf eine zylindrische Oberfläche mit gleicher Wanddicke aufgebracht werden kann. Dadurch werden thermomechanische Belastungen bei Temperaturänderungen bei Inbetriebnahme des Supraleitkabels vermieden. Durch den sich ändernden Querschnitt des Leiters wird eine Optimierung im Hinblick auf thermische Verluste und Verluste durch Joule'sche Wärme erzielt.

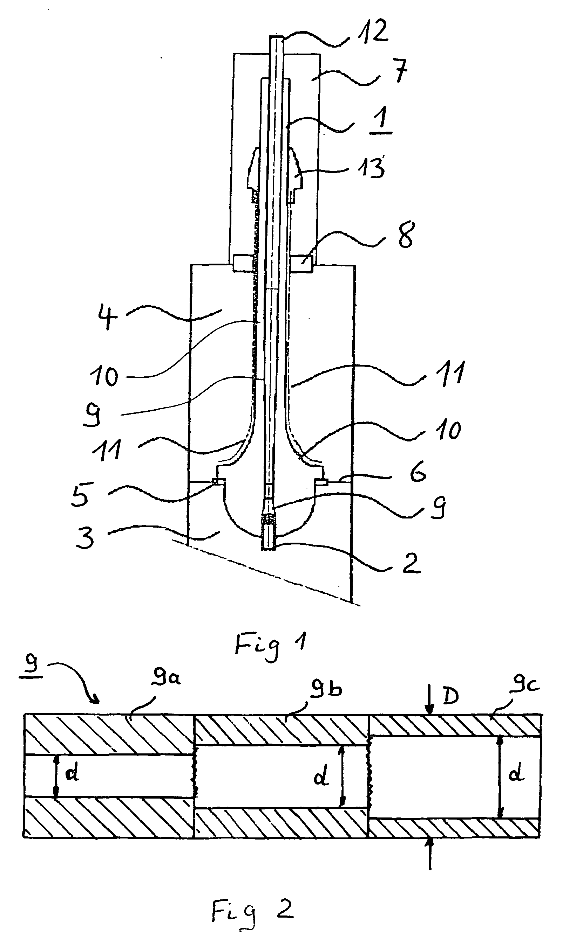

Die Erfindung ist anhand der in den Figuren 1 und 2 schematisch dargestellten Ausführungsbeispiele näher erläutert.

In der Figur 1 ist ein Ausführungsbeispiel einer elektrischen Durchführung 1 zur Verbindung eines supraleitenden Kabels 2 mit einem normalleitenden nicht dargestellten Kabel dargestellt. Die Verbindung an das Supraleitkabel 2 befindet sich in einem Gehäuse 3, in welchem eine Temperatur im Bereich von 70 Kelvin vorherrscht. Benachbart zu dem Gehäuse 3 befindet sich ein weiteres Gehäuse 4, welches über eine Flanschverbindung 5 mit dem Gehäuse 3 verbunden ist. Eine Trennwand 6 trennt die Innenräume der Gehäuse 3 und 4 voneinander. Der Innenraum des Gehäuses 4 ist vorzugsweise mit einem festen Isoliermaterial z. B. Polyurethanschaum oder einem geschäumten Glasmaterial ausgefüllt.

Oberhalb von dem Gehäuse 4 befindet sich noch ein weiteres Gehäuse 7, in welchem Umgebungstemperatur herrscht. Das Gehäuse 4 ist gegenüber dem Gehäuse 7 durch eine dichte Trennwand 8 abgeschottet.

Die in dem Gehäuse 4 herrschende Temperatur liegt zwischen der kryogenen Temperatur im Gehäuse 3 und der Umgebungstemperatur im Gehäuse 7. Die Außenwandungen der Gehäuse 3 und 4 bilden einen Kryostaten für eine gute thermische Isolierung.

Die Durchführung 1 weist einen zentralen Leiter 9 auf, der mit einer Isolierschicht 10 versehen ist. Darüberhinaus ist noch eine Feldsteuerschicht 11 auf der Isolierschicht 10 vorgesehen, die sich zumindest über einen Teil der Isolierschicht 10 erstreckt. Am oberen Ende der Durchführung 1 ist ein Anschluß 12 zum Anschluß der Durchführung 1 und damit des Supraleiterkabels 2 an ein elektrisches Netz bzw. eine geeignete Einrichtung.

Die Feldsteuerschicht 11 besteht aus einer an der äußeren Oberfläche der Isolierschicht 10 anhaftenden Schicht aus Zink oder einem anderen leitfähigen Material. Die Feldsteuerschicht 11 wird vorzugsweise in Form einer Lackschicht aufgebracht. Die Isolierschicht 10 besteht aus einem thermoplastischen oder vernetzten Werkstoff auf der Basis von Polyethylen bzw. Polypropylen. Die Isolierschicht 10 kann aber auch aus Epoxidharz bestehen. Die Feldsteuerschicht 11 ist mit einem in der Hochspannungstechnik bekannten Feldsteuerkonus 13 verbunden.

In der Figur 2 ist der Leiter 9 bzw. ein Teilstück davon im Schnitt dargestellt. Der Leiter 9 ist als rohrförmiges Bauteil ausgestaltet. Er besteht aus mehreren rohrförmigen Teilstücken 9a, 9b und 9c, die an ihren Stirnflächen durch Schweißen oder Löten miteinander verbunden sind. Die Teilstücke 9a, 9b und 9c weisen einen gleichen Außendurchmesser D auf, ihr Innendurchmesser d ist jedoch unterschiedlich und steigt von 9a über 9b nach 9c an. Das Teilstück 9a wird an das Stromnetz bzw. ein normalleitendes Kabel und das Teilstück 9c an den Leiter des Supraleiterkabels 2 angeschlossen.

Bei der Durchführung 1 verändert sich die Temperatur des Leiters 9 während des Betriebes von der kryogenen Temperatur (ca. 70 Kelvin) an der Verbindung des Teilstücks 9c mit dem Leiter des Supraleiterkabels 2 bis zur Umgebungstemperatur an der Verbindungsstelle 12 des Teilstücks 9a mit dem Stromnetz. Der elektrische Widerstand des Leiters 9 verringert sich, während sich seine Temperatur verringert. Es ist deshalb von Vorteil, den Querschnitt des Leiters 9 im Bereich der tiefen Temperatur zu verringern um auf diese Weise über die Länge des Leiters 9 zwischen dem Bereich der Kryotemperatur und der Umgebungstemperatur den Wärmefluß zu begrenzen und die thermischen Verluste durch Joule'sche Erwärmung des Leiters 9 auf einem niedrigen Niveau zu halten.

## Patentansprüche

1. Elektrische Durchführung (1) zur Verbindung einer supraleitenden Einrichtung (2) mit einer bei Raumtemperatur befindlichen Einrichtung, bestehend aus einem elektrischen Leiter (9) und einer den Leiter (9) umgebenden Isolierschicht (10), **dadurch gekennzeichnet, daß** der Leiter (9) aus mehreren an ihren Enden elektrisch miteinander verbundenen rohrförmigen Teilstücken (9a,9b,9c) aus elektrisch leitfähigem Material besteht, wobei die rohrförmigen Teilstücke (9a,9b,9c) einen gleichen Außendurchmesser D und einen voneinander abweichenden Innendurchmesser d aufweisen.

2. Elektrische Durchführung nach Anspruch 1, **dadurch gekennzeichnet, daß** die Teilstücke (9a,9b,9c) an ihren Enden durch Löten oder Schweißen miteinander verbunden sind.

3. Elektrische Durchführung nach Anspruch 1 oder 2, **dadurch gekennzeichnet, daß** die elektrische Isolierung (10) aus einem thermoplastischen oder vernetzten Polymeren besteht.

4. Elektrische Durchführung nach Anspruch 1 oder 2, **dadurch gekennzeichnet, daß** die Isolierung (10) aus Epoxidharz besteht.

5. Elektrische Durchführung nach einem der Ansprüche 1 bis 4, **dadurch gekennzeichnet, daß** der Leiter (9) als Verbindungsstück zwischen dem Leiter eines supraleitföhigen Kabels (2) und dem Stromnetz dient.

6. Elektrische Durchführung nach Anspruch 5, **dadurch gekennzeichnet, daß** der Leiter des supraleitfähigen Kabels (2) an das Teilstück (9c) mit dem größten Innendurchmesser und das Teilstück (9a) mit dem kleinsten Innendurchmesser an das Netz angeschlossen ist.

7. Elektrische Durchführung nach einem der Ansprüche 1 bis 6, **dadurch gekennzeichnet, daß** auf der Isolierschicht (10) eine elektrisch leitende Feldsteuerschicht (11) angeordnet ist.

## Claims

1. Electrical bushing (1) for connecting a superconducting device (2) to a device located at room temperature, comprising an electrical conductor (9) and an insulating layer (10) surrounding the conductor (9), **characterized in that** the conductor (9) comprises a plurality of tubular sections (9a, 9b, 9c), which are made from an electrically conductive material and are electrically connected to one another at their ends, the tubular sections (9a, 9b, 9c) having an identical outer diameter D and inner diameters d which are different from one another.

2. Electrical bushing according to Claim 1, **characterized in that** the sections (9a, 9b, 9c) are connected to one another at their ends by means of soldering or welding.

3. Electrical bushing according to Claim 1 or 2, **characterized in that** the electrical insulation (10) consists of a thermoplastic or crosslinked polymer.

4. Electrical bushing according to Claim 1 or 2, **characterized in that** the insulation (10) consists of epoxy resin.

5. Electrical bushing according to one of Claims 1 to 4, **characterized in that** the conductor (9) acts as a connecting piece between the conductor of a superconductive cable (2) and the power supply system.

6. Electrical bushing according to Claim 5, **characterized in that** the conductor of the superconductive cable (2) is connected to the section (9c) having the largest inner diameter, and the section (9a) having the smallest inner diameter is connected to the power supply system.

7. Electrical bushing according to one of Claims 1 to 6, **characterized in that** an electrically conducting field control layer (11) is arranged on the insulating layer (10).

## Revendications

1. Douille de traversée électrique (1) pour la liaison d'un dispositif supraconducteur (2) avec un dispositif à température ambiante, composée d'un conducteur électrique (9) et d'une couche isolante (10) entourant le conducteur (9), **caractérisée en ce que** le conducteur (9) se compose de plusieurs éléments tubulaires partiels (9a, 9b, 9c), en un matériau conducteur de l'électricité, reliés électriquement entre eux à leurs extrémités, les éléments tubulaires partiels (9a, 9b, 9c) ayant un même diamètre extérieur D et des diamètres intérieurs d différents les uns des autres.

2. Douille de traversée électrique selon la revendication 1, **caractérisée en ce que** les éléments partiels (9a, 9b, 9c) sont reliés les uns aux autres à leurs extrémités par brasage ou soudage.

3. Douille de traversée électrique selon la revendication 1 ou 2, **caractérisée en ce que** l'isolation électrique (10) se compose d'un polymère thermoplastique ou réticulé.

4. Douille de traversée électrique selon la revendication 1 ou 2, **caractérisée en ce que** l'isolation électrique (10) se compose de résine époxy.

5. Douille de traversée électrique selon l'une des revendications 1 à 4, **caractérisée en ce que** le conducteur (9) fait office d'élément de liaison entre le conducteur d'un câble supraconducteur (2) et le réseau électrique.

6. Douille de traversée électrique selon la revendication 5, **caractérisée en ce que** le conducteur du câble supraconducteur (2) est relié à l'élément partiel (9c) avec le plus grand diamètre intérieur et **en ce que** l'élément partiel (9a) avec le plus petit diamètre intérieur est relié au réseau.

7. Douille de traversée électrique selon l'une des revendications 1 à 6, **caractérisée en ce qu'**une couche de guidage de champ (11) conductrice de l'électricité est disposée sur le couche isolante (10).
